# FASCICULE DE BREVET EUROPEEN

(11) **EP 1 507 642 B1**
(45) Date de publication et mention de la délivrance du brevet: **27.06.2007**
(21) Numéro de dépôt: 03749915.9
(22) Date de dépôt: 02.05.2003
(51) Int. Cl.: B29C 49/46, B65B 3/02

(54) **PROCEDE DE FABRICATION D UN CONTENANT EN RESINE POLYESTER ET DISPOSITIF POUR SA MISE EN OEUVRE**
VERFAHREN ZUR HERSTELLUNG EINES BEHÄLTERS AUS POLYESTERHARZ UND VORRICHTUNG ZUR DURCHFÜHRUNG DESSELBEN
METHOD OF PRODUCING A POLYESTER RESIN CONTAINER AND DEVICE FOR PERFORMING THE SAME

(30) Priorité: 03.05.2002 FR 0205583
(43) Date de publication de la demande: 23.02.2005
(73) Titulaire: Nestlé Waters Management & Technology, (Societe anonyme), 92130 Issy-les-Moulineaux (FR)
(72) Inventeur: DESANAUX, Christophe, 76530 Grand Couronne (FR); CONTAL, Alain, F-8800o Epinal (FR); DENIS, Gérard, F-51100 Reims (FR)
(74) Mandataire: Nuss, Pierre
(86) Numéro de dépôt international: PCT/FR2003/001375
(87) Numéro de publication internationale: WO 2003/095179

(56) Documents cités:
- EP-A- 0 081 883
- DE-A- 19 803 909
- FR-A- 1 430 316
- FR-A- 2 798 093
- US-A- 4 039 641
- PATENT ABSTRACTS OF JAPAN vol. 013, no. 041 (M-791), 30 janvier 1989 (1989-01-30) -& JP 63 249616 A (KOMATSU LTD), 17 octobre 1988 (1988-10-17) -& DATABASE WPI Week 198847 Derwent Publications Ltd., London, GB; AN 1988-335238 XP002226520 & JP 63 249616 A
- PATENT ABSTRACTS OF JAPAN vol. 006, no. 216 (M-168), 29 octobre 1982 (1982-10-29) -& JP 57 123027 A (PENTEL KK), 31 juillet 1982 (1982-07-31) -& DATABASE WPI Week 198236 Derwent Publications Ltd., London, GB; AN 1982-75423E XP002226519 & JP 57 123027 A

## Description

La présente invention concerne le domaine de la fabrication de contenants en matériau polymère, notamment en polyester. Plus particulièrement, elle concerne le domaine de la fabrication de bouteilles en polyester, de préférence en polyéthylène téréphtalate (PET), contenant un liquide, de préférence de l'eau et notamment de l'eau minérale.

La présente invention a pour objet un procédé de fabrication d'un contenant en polyester par injection de liquide dans une préforme. Elle a également pour objet un dispositif pour mettre en oeuvre ce procédé.

Depuis de nombreuses années, les bouteilles en PET que l'on trouve habituellement dans le commerce sont fabriquées par soufflage ou soufflage-étirage, à l'air comprimé, de préformes en PET.

Une préforme se présente habituellement sous forme de tube cylindrique fermé à l'une de ses extrémités et ouvert à son extrémité opposée. La tête de la préforme, ouverte, correspond au col du contenant. Au cours du procédé classique de fabrication du contenant à partir d'une préforme, les préformes sont enfilées, têtes en bas, sur les plots cylindriques d'une chaîne de convoyage continue qui transporte ainsi les préformes à travers un four, essentiellement constitué par une section rectiligne bordée de chaque côté de moyens de chauffage par rayonnement, ce afin de conditionner en température la matière plastique pour l'étape de soufflage-étirage subséquente.

La préforme chaude est ensuite prélevée et transportée dans un moule d'une machine de soufflage. Le mouvement de transport réalisé par un bras de transfert par exemple, est coordonné avec celui de la machine de soufflage qui est généralement réalisée sous la forme d'un carrousel rotatif tournant de manière continue autour de son axe vertical et qui porte, à sa périphérie, une série de moules identiques. Ainsi, la préforme est placée dans le moule immédiatement après que celui-ci se soit ouvert et que le contenant précédemment formé soit retiré.

La préforme est préalablement chauffée de manière à être dans le moule à une température supérieure à la température de transition vitreuse (environ 100°C) afin de permettre la mise en forme par soufflage-étirage. La température de la préforme à la fin de l'étape de chauffage est légèrement supérieure à celle requise à l'intérieur du moule de la souffleuse, ce afin de tenir compte du refroidissement qui a lieu sur la distance existant entre le lieu de chauffage et le lieu du soufflage. Grâce au mouvement rotatif et à la présence simultanée de plusieurs moules, une telle machine de soufflage permet de produire des contenants à des cadences très élevées, de l'ordre de plusieurs dizaines de milliers d'unités à l'heure soit de l'ordre de 1000 à 2000 bouteilles par heure et par moule.

Le soufflage-étirage se fait par étirage à l'aide d'une tige métallique, une injection d'air se faisant à des pressions variant de 3 à 40 bars (3.10⁵ Pa à 4.10⁶ Pa). L'air est injecté à travers une buse dont l'extrémité est introduite à travers l'ouverture de la tête de la préforme.

Les bouteilles fabriquées par injection d'air sous pression ont une durée de vie relativement satisfaisante pour un poids et un type de matière donnés. Néanmoins, les caractéristiques et propriétés intrinsèques du PET peuvent laisser envisager des résultats encore meilleurs en modifiant le procédé de fabrication des contenants.

Le document FR1430316 montre un procédé et un dispositif d'extrusion d'une paraison suivi du formage par soufflage utilisant un liquide. Le document FR2798093 montre un procédé et un dispositif de formage par soufflage-étirage classique.

Un des objectifs de la présente invention est par conséquent de proposer un procédé amélioré de fabrication d'un contenant en polyester à partir d'une préforme.

Un autre objectif est de pouvoir éventuellement intégrer l'étape de remplissage du contenant dans le processus de fabrication de ce dernier.

A cet effet, l'invention propose un procédé de fabrication d'un contenant selon la revendication 1.

Les contenants obtenus grâce à ce procédé ont des caractéristiques bien meilleures que ceux obtenus avec un procédé de soufflage-étirage de type classique à gonflage par fluide gazeux. Notamment, il a été constaté qu'ils avaient une durée de vie supérieure pour un poids et un type de matière donnés. Le taux de cristallinité, c'est-à-dire la masse de phase cristalline par rapport à la masse totale de polymère, d'un contenant obtenu avec le procédé selon l'invention peut notamment être beaucoup plus important.

Par exemple, dans le cas de bouteilles en PET, les bouteilles obtenues par le procédé selon l'invention peuvent avoir des niveaux de cristallinité compris entre 30% et 50% ce qui leur confère des durées de vie supérieures aux bouteilles actuellement obtenues pour un même poids et un même type de PET possédant des niveaux de cristallinité compris entre 25% et 30%.

Selon un autre aspect de la présente invention, ledit fluide incompressible est un liquide injecté sous pression, sous une vitesse et une pression contrôlées, (en quantité contrôlée), préférentiellement le liquide destiné à être contenu dans ledit contenant final à former.

Ainsi, le liquide utilisé pour la fabrication des contenants peut être le liquide à conditionner, par exemple de l'eau et notamment de l'eau minérale, ce qui permet de se passer d'une étape ultérieure de remplissage. Les étapes de fabrication de contenants et de remplissage de ces contenants se trouvent ainsi intégrées en une seule et même étape. Cette solution présente bien évidemment d'importants avantages économiques et limite les risques de contamination, en particulier bactérienne, du contenant vide.

Avantageusement, lorsque ledit contenant à former est une bouteille en PET, ladite préforme est chauffée à une température supérieure à la température de transition vitreuse dudit PET, typiquement aux environs de 75°C à 85°C, lors de ladite étape de chauffage et la température dudit fluide incompressible est comprise entre 10°C et 90°C lors de ladite étape d'expansion.

Conformément à un mode de réalisation préféré de l'invention, ladite température du fluide incompressible est d'environ 15°C.

Selon un autre aspect de la présente invention, il est également proposé un dispositif selon la revendication 7.

Ainsi, le procédé selon l'invention peut notamment être mis en oeuvre à partir d'une installation de fabrication de contenants déjà existante, par exemple une unité de fabrication de bouteilles en PET de type classique. Il suffit de modifier l'installation afin que les buses de soufflage qui sont associées aux différents moules de la machine de soufflage traditionnelle soient raccordées à des moyens d'injection de liquide selon l'invention plutôt qu'aux arrivées de fluide gazeux.

Toutefois, le procédé selon l'invention pourra également être mis en oeuvre avec une installation spécifiquement construite à cet effet et présentant les différents éléments évoqués ci-dessus.

Avantageusement, un moyen de commande dudit moyen d'injection de liquide est actionné par du gaz sous pression délivré par une ligne d'alimentation en fluide gazeux de ladite installation de soufflage ou de soufflage-étirage de type classique.

Il peut s'agir par exemple d'un piston dont le déplacement dans un vérin rempli de liquide est commandé par le fluide gazeux sous pression d'une installation de soufflage ou de soufflage-étirage de type classique. De la sorte, les arrivées de fluide gazeux d'une installation de fabrication de contenants déjà existante, par exemple une unité de fabrication de bouteilles en PET de type classique, sont utilisées pour commander les moyens d'injection de liquide rapportés selon l'invention. L'installation de soufflage conventionnelle ne subit donc globalement que peu de modifications.

Avantageusement, ledit moyen d'injection de liquide est également raccordé à une arrivée d'une ligne d'alimentation en liquide, préférentiellement en liquide de remplissage des contenants à former.

De la sorte, comme il a été expliqué plus haut, le liquide utilisé pour la fabrication des contenants est le liquide à conditionner, ce qui permet de se passer d'un dispositif supplémentaire de remplissage. Les dispositifs de fabrication de contenants et de remplissage de ces contenants se trouvent ainsi intégrés en un seul et même dispositif.

Ainsi, selon un mode de réalisation préféré, le moyen d'injection consiste en un ensemble cylindre/piston, dans lequel le piston formant moyen de commande à déplacements alternatifs délimite dans ledit cylindre, d'une part, une chambre de commande reliée à une ligne d'alimentation en air sous pression et, d'autre part, une chambre d'injection de liquide reliée à une arrivée d'une ligne d'alimentation en liquide et raccordée à la buse.

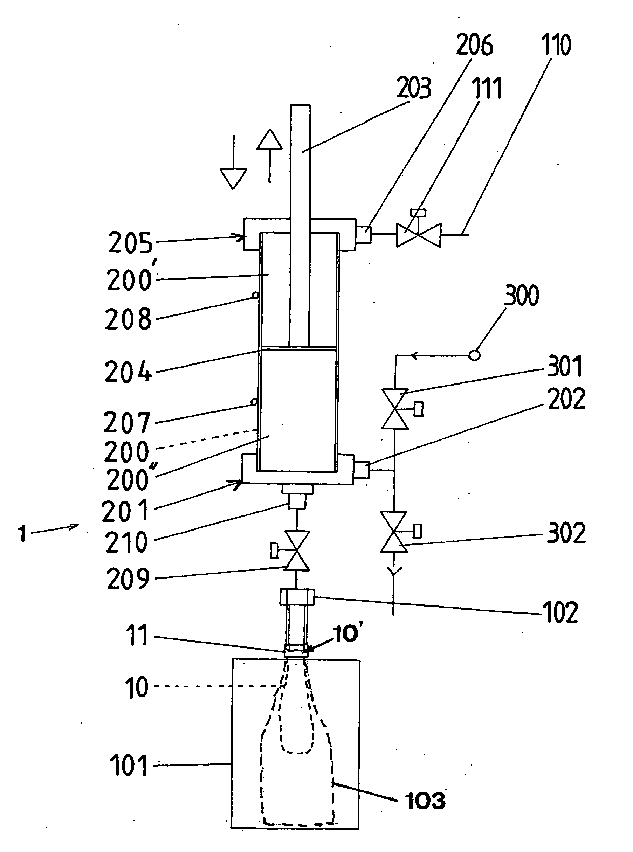

L'invention sera mieux comprise grâce à la description ci-après, qui se rapporte à un mode de réalisation préféré, donné à titre d'exemple non limitatif, et expliqué avec référence à la figure schématique annexée représentant un dispositif 1 d'injection de liquide dans une préforme installée dans un moule ou une cavité, selon la présente invention.

Le mode de réalisation donné ici à titre d'exemple se rapporte à un procédé de fabrication de bouteilles d'eau en PET à partir d'une préforme chauffée. Ainsi qu'on le voit sur la figure annexée, une préforme 10 se présente sous la forme d'un tube cylindrique fermé à son extrémité inférieure. La tête 11 de la préforme, ouverte, correspond au col de la bouteille, c'est à dire, dans ce cas, au goulot sur lequel doit être vissé un bouchon.

Le procédé est mis en oeuvre au moyen de modifications apportées à une installation classique de fabrication de bouteilles d'eau minérale en PET, telle que décrite précédemment dans la partie introductive de la présente.

Selon la présente invention, lors de l'étape d'expansion, est injecté à travers l'ouverture 10' de la préforme 10 non pas de l'air sous pression, mais un fluide incompressible. On utilisera avantageusement comme fluide incompressible permettant la mise en forme de la bouteille le liquide que cette bouteille doit contenir, de manière à supprimer une étape ultérieure de remplissage.

Afin de mettre en oeuvre l'invention, des modifications sont apportées à une installation classique de fabrication de bouteilles en PET, ainsi qu'on le voit sur la figure annexée.

Globalement, sont rapportés sur la machine de soufflage, au niveau des moules, des dispositifs 1 d'injection de liquide adaptés à être raccordés aux buses 102 associées à ces moules (un dispositif 1 par moule).

La figure unique représente de manière schématique un moule 101 à l'intérieur duquel est renfermé le corps d'une préforme 10. Le col 11 de la préforme dépasse à l'extérieur du moule. La buse de soufflage 102 associée au moule est insérée à travers l'ouverture 10' du col 11 de la préforme 10.

La buse de soufflage 102 est normalement raccordée à une arrivée d'air 110. Selon la présente invention, le raccordement direct entre l'arrivée d'air 110 et la buse 102 est démonté. Par contre, un dispositif 1 d'injection de liquide constitué essentiellement d'un vérin 200 est associé au moule 101.

L'ensemble cylindre/piston ou vérin 200 comporte un corps cylindrique adapté à renfermer hermétiquement aussi bien un liquide qu'un gaz et un piston 203, 204 adapté à coulisser longitudinalement dans le corps du vérin 200. La tête 204 du piston sépare le corps du vérin 200 en deux compartiments 200' et 200" (ou chambres) hermétiquement séparés l'un de l'autre, un compartiment supérieur 200' destiné à recevoir de l'air et un compartiment inférieur 200" destiné à recevoir de l'eau. La partie supérieure 205 du vérin comprend une entrée d'air 206 et la partie inférieure 201 du vérin comprend une entrée d'eau 202 et une sortie d'eau 210.

L'entrée d'air 206 est raccordée à l'arrivée d'air 110 par l'intermédiaire d'une vanne 111. L'entrée d'eau 202 est associée à un système d'alimentation en eau comprenant une arrivée d'eau 300 raccordée par l'intermédiaire d'une vanne 301 à l'entrée d'eau 202 au niveau de laquelle intervient également un conduit de purge commandé par une vanne 302. Avantageusement, selon l'invention, le système d'alimentation en eau amène l'eau minérale destinée à être contenue dans les bouteilles. La sortie d'eau 210 est raccordée à la buse 102 de manière à ce que cette dernière soit alimentée par le dispositif 1 d'injection d'eau 200.

Des détecteurs magnétiques 207 et 208 (formant détecteurs de position ou de niveau) sont installés sur le vérin 200 à des hauteurs différentes, le détecteur 207 intervenant dans une partie inférieure 201 du vérin et le détecteur 208 intervenant dans une partie supérieure 205 du vérin.

Les vannes 111, 209, 301 et 302 sont commandées par des servomécanismes de commande pilotés par une unité centrale de commande d'asservissement ou automate (non représenté) de l'installation de fabrication de bouteilles de manière à ce que le fonctionnement du dispositif 1 d'injection d'eau soit coordonné avec le fonctionnement de la machine de formage (soufflage) et, plus généralement avec le fonctionnement de l'ensemble de l'installation de fabrication de bouteilles.

Le fonctionnement du dispositif 1 d'injection d'eau, coordonné avec le fonctionnement de la machine de formage ou de soufflage, est réalisé suivant un cycle d'injection d'une durée inférieure à la durée du cycle de rotation d'un moule autour de l'axe de la machine de formage.

Dans une première étape du cycle d'injection, la vanne 301 est ouverte pour remplir la partie inférieure du vérin en eau jusqu'à ce que la tête de piston 204 se trouve au niveau du détecteur magnétique 208. Lorsque le détecteur magnétique 208 détecte la tête de piston 204, la deuxième étape consistant à fermer la vanne 301 est exécutée. Dans une troisième étape du cycle d'injection, la vanne 111 est ouverte afin de mettre la partie supérieure du vérin sous pression. Cette étape est exécutée pendant un temps donné fixé par une temporisation. A l'issue de cette étape, une quatrième étape est exécutée pendant laquelle la vanne 209 est ouverte. Le piston 203, 204, actionné par l'air sous pression présent dans sa partie supérieure 205, va alors descendre provoquant l'injection d'eau à travers la vanne 209 dans la buse 102 et, par suite, dans la préforme 10 qui est simultanément étirée et gonflée par l'eau injectée jusqu'à atteindre les parois 103 du moule 101. Est ainsi formée la bouteille qui, de surcroît, est déjà remplie d'eau. Cette étape s'interrompt lorsque le détecteur magnétique 207 détecte la présence de la tête du piston 203. Après un temps donné fixé par une temporisation, les vannes 209 et 111 sont fermées. Lorsque, à l'issue du cycle de rotation du moule autour de l'axe de la machine de soufflage, ce moule s'ouvre automatiquement, le bras de transfert de bouteilles sort la bouteille formée et déjà remplie.

L'optimisation du procédé se fait pour un taux d'étirage prédéterminé, une température de préforme supérieure à la température de la transition vitreuse du polyester utilisé et une vitesse d'injection rapide, supérieure à celle de refroidissement du matériau mis en oeuvre. Ainsi, un autre avantage est un temps de cycle très court, le temps d'injection du fluide incompressible étant nettement inférieur à la seconde, de préférence compris entre 0,02 s et 0,5 s et plus préférentiellement entre 0,1 s et 0,2 s.

Afin d'éliminer les bulles d'air éventuelles contenues dans le circuit, est également prévu un cycle de purge. Le cycle de départ est défini via l'automate.

Dans une première étape du cycle de purge, la vanne 301 est ouverte pour remplir la partie inférieure 201 du vérin en eau jusqu'à ce que la tête de piston 204 se trouve au niveau du détecteur magnétique 208. Lorsque le détecteur magnétique 208 détecte la tête de piston 204, la deuxième étape consistant à fermer la vanne 301 est exécutée. Dans une troisième étape du cycle d'injection, la vanne 111 est ouverte afin de mettre la partie supérieure du vérin sous pression. Cette étape est exécutée pendant un temps donné fixé par une temporisation. A l'issue de cette étape, une quatrième étape est exécutée pendant laquelle la vanne de purge 302 est ouverte. Le piston 203, 204, actionné par l'air sous pression présent dans la partie supérieure 205, va alors descendre provoquant l'injection d'eau à travers la vanne 302. Cette étape s'interrompt lorsque le détecteur magnétique 207 détecte la présence de la tête du piston 203. Après un temps donné fixé par une temporisation, les vannes 302 et 111 sont fermées.

La température de l'eau peut être comprise entre 10°C et 90°C suivant les contraintes techniques imposées par la bouteille que l'on désire produire. Il faut notamment que la pression soit assez importante pour déformer la préforme et les basses températures imposent des pressions plus importantes. Toutefois, lorsque les contraintes techniques le permettent, la température du liquide sera avantageusement de 15°C.

Avantageusement, afin que le col 11 de la préforme 10 ne risque pas d'être déformé pendant le cycle d'expansion, ce dernier est isolé du liquide par une pièce étanche et/ou refroidi.

Les contenants obtenus grâce à ce procédé ont des caractéristiques bien meilleures que ceux obtenus avec un procédé d'expansion de type classique à soufflage par fluide gazeux. Notamment, ils ont une durée de vie supérieure pour un poids et un type de matière donnés. Le taux de cristallinité, c'est à dire la masse de phase cristalline par rapport à la masse totale de polymère, d'un contenant obtenu avec un procédé selon l'invention peut notamment être beaucoup plus important. L'utilisation de vitesses d'expansion rapides permet d'obtenir un taux d'étirage assez élevé et une cristallisation induite qui l'est également.

Par exemple, dans le cas d'essais réalisés avec de l'eau à des températures d'eau allant de 85°C à 95°C et sous des pressions allant de 2 bars à 3 bars (2.10⁵ Pa à 3.10⁵ Pa) dans le cas de contenants en PET, les contenants obtenus par le procédé selon l'invention avaient des niveaux de cristallinité pouvant aller jusqu'à 50%. On a intégré pour obtenir ce taux, toutes les phases non amorphes, c'est à dire la phase cristalline et la mésophase.

Bien entendu, l'invention est seulement limitée par les revendications, et n'est pas limitée au mode de réalisation décrit et représenté au dessin annexé.

## Revendications

1. Procédé de fabrication d'un contenant en résine polyester à partir d'une préforme (10) se présentant sensiblement sous forme d'un tube cylindrique comportant une ouverture (10') au niveau d'un col (11), ledit procédé comprenant une étape de chauffage de ladite préforme (10) à une température supérieure à la température de transition vitreuse dudit polyester et une étape d'expansion effectuée à l'intérieur d'une cavité, **caractérisé en ce que**, lors de ladite étape d'expansion, un liquide est injecté à travers l'ouverture (10') de ladite préforme (10) pour former ledit contenant, et **en ce qu'**un moyen de commande (203, 204) du moyen d'injection de liquide est actionné par du gaz sous pression délivré par une ligne d'alimentation en fluide gazeux (110) d'une installation de soufflage-étirage de type classique.

2. Procédé selon la revendication 1, **caractérisé en ce que** le liquide est injecté sous pression avec une vitesse et une pression contrôlées.

3. Procédé selon l'une quelconque des revendications 1 et 2, **caractérisé en ce que** le liquide injecté correspond au liquide destiné à être contenu dans le contenant.

4. Procédé selon l'une quelconque des revendications 1 à 3, **caractérisé en ce que** ledit contenant à former étant une bouteille en PET, ladite préforme (10) est chauffée à une température supérieure à la température de transition vitreuse dudit PET lors de ladite étape de chauffage et la température dudit liquide est comprise entre 10 °C et 90 °C lors de ladite étape d'expansion.

5. Procédé selon la revendication 4, **caractérisé en ce que** ladite température du liquide est d'environ 15 °C.

6. Procédé selon l'une quelconque des revendications 1 à 5, **caractérisé en ce que** le temps d'injection du liquide est compris entre 0,02 s et 0,5 s et plus préférentiellement entre 0,1 s et 0,2 s.

7. Dispositif (1) pour mettre en oeuvre le procédé selon l'une quelconque des revendications précédentes, **caractérisé en ce qu'**il comprend essentiellement un moyen d'injection de liquide adapté à être raccordé à une buse (102) d'une installation de soufflage-étirage de type classique à expansion par fluide gazeux et **en ce qu'**un moyen de commande (203, 204) dudit moyen d'injection de liquide est actionné par du gaz sous pression délivré par une ligne d'alimentation en fluide gazeux (110) de ladite installation de soufflage-étirage de type classique.

8. Dispositif (1) selon la revendication 7, **caractérisé en ce que** ledit moyen d'injection de liquide est également raccordé à une arrivée (300) d'une ligne d'alimentation en liquide, préférentiellement en liquide de remplissage des contenants à former.

9. Dispositif (1) selon la revendication 7 ou 8, **caractérisé en ce que** le moyen d'injection consiste en un ensemble cylindre/piston, dans lequel le piston (203, 204) formant moyen de commande à déplacements alternatifs délimite dans ledit cylindre, d'une part, une chambre de commande (200') reliée à une ligne d'alimentation (110) en air sous pression et, d'autre part, une chambre d'injection de liquide (200") reliée à une arrivée (300) d'une ligne d'alimentation en liquide et raccordée à la buse (102).

## Claims

1. A process for the production of a polyester resin container from a preform (10) substantially in the form of a cylindrical tube including an opening (10') in the neck (11), the method comprising a step of heating the preform (10) to a temperature higher than the vitreous transition temperature of the polyester and a step of expansion carried out within a cavity, **characterised in that**, during the step of expansion, a liquid is injected through the opening (10') in said preform (10) to form the container, and **in that** a means of controlling (203, 204) a means of injecting the liquid is actuated by a pressurised gas delivered by a gaseous fluid supply line (110) of a blow moulding installation of conventional type.

2. A process according to Claim 1, **characterised in that** the liquid is injected under pressure with a controlled speed and pressure.

3. A process according to any of Claims 1 or 2, **characterised in that** the injected liquid corresponds to the liquid destined to be contained in the container.

4. A process according to any of Claims 1 to 3, **characterised in that** the container to be formed is a PET bottle, and the preform (10) is heated to a temperature higher than the vitreous transformation temperature of the PET during the heating step and the temperature of the liquid is comprised between 10 °C and 90 °C during the expansion step.

5. Process according to Claim 4, **characterised in that** the temperature of the liquid is around 15 °C.

6. Process according to any of Claims 1 to 5, **characterised in that** the time taken to inject the liquid is comprised between 0.02 and 0.5 seconds, and more preferably between 0.1 and 0.2 seconds.

7. Device (1) for putting into practice the process according to any preceding claim, **characterised in that** it comprises essentially a liquid injection means adapted to be connected to a nozzle (102) of a blow moulding installation of conventional type with expansion by gaseous fluid and **in that** a means of controlling (203, 204) said liquid injection means is actuated by a pressurised gas delivered by a gaseous fluid supply line (110) of said blow moulding installation of conventional type.

8. Device (1) according to Claim 7, **characterised in that** said liquid injection means is also connected to an inlet (300) of a liquid supply line, the liquid preferably being for filling the containers to be formed.

9. Device (1) according to Claim 7 or 8, **characterised in that** the injection means consists of a cylinder/piston assembly in which the piston (203, 204) forming means of control having alternate movement delimits in the cylinder, on the one hand, a control chamber (200') connected to a supply line (110) of pressurised air and, on the other hand, a liquid injection chamber (200") connected to an inlet (300) of a liquid supply line and connected to the nozzle (102).

## Patentansprüche

1. Verfahren zur Herstellung eines Behälters aus Polyesterharz ausgehend von einem Vorformling (10), der sich im Wesentlichen in Form einer zylindrischen Röhre darstellt, die eine Öffnung (10') im Bereich eines Halses (11) umfasst, wobei das Verfahren einen Schritt der Erwärmung des Vorformlings (10) auf eine Temperatur, die über der Glasübergangstemperatur des Polyesters liegt, und einen Schritt der Expansion umfasst, der im Inneren eines Hohlraums stattfindet, **dadurch gekennzeichnet, dass** bei dem Expansionsschritt eine Flüssigkeit durch die Öffnung (10') des besagten Vorformlings (10) eingespritzt wird, um den Behälter auszubilden, und dass eine Regeleinrichtung (203, 204) der Flüssigkeitseinspritzeinrichtung durch Druckgas betätigt wird, das über eine Leitung (110) zur Versorgung mit gasförmigem Medium einer herkömmlichen Blas-/Ziehanlage geliefert wird.

2. Verfahren nach Anspruch 1, **dadurch gekennzeichnet, dass** die Flüssigkeit unter Druck mit geregelter Geschwindigkeit und geregeltem Druck eingespritzt wird.

3. Verfahren nach einem der Ansprüche 1 und 2, **dadurch gekennzeichnet, dass** die eingespritzte Flüssigkeit der Flüssigkeit entspricht, die im Behälter enthalten sein soll.

4. Verfahren nach einem der Ansprüche 1 bis 3, **dadurch gekennzeichnet, dass** der auszubildende Behälter eine Flasche aus PET ist, wobei der Vorformling (10) beim Erwärmungsschritt auf eine Temperatur erwärmt wird, die über der Glasübergangstemperatur des PET liegt, und die Temperatur der Flüssigkeit beim Expansionsschritt zwischen 10 °C und 90 °C liegt.

5. Verfahren nach Anspruch 4, **dadurch gekennzeichnet, dass** die Temperatur der Flüssigkeit ca. 15 °C beträgt.

6. Verfahren nach einem der Ansprüche 1 bis 5, **dadurch gekennzeichnet, dass** die Einspritzzeit der Flüssigkeit zwischen 0,02 s und 0,5 s, und bevorzugter zwischen 0,1 s und 0,2 s liegt.

7. Vorrichtung (1) zur Umsetzung des Verfahrens nach einem der vorherhegenden Ansprüche, **dadurch gekennzeichnet, dass** sie im Wesentlichen eine Flüssigkeitseinspritzeinrichtung umfasst, die dazu ausgelegt ist, an eine Düse (102) einer herkömmlichen Blas-/Ziehanlage zur Expansion durch gasförmiges Medium angeschlossen zu werden, und dass eine Regeleinrichtung (203, 204) der besagten Flüssigkeitseinspritzeinrichtung durch Druckgas betätigt wird, das über eine Leitung (110) zur Versorgung mit gasförmigem Medium der herkömmlichen Blas-/Ziehanlage geliefert wird.

8. Vorrichtung (1) nach Anspruch 7, **dadurch gekennzeichnet, dass** die Flüssigkeitseinspritzeinrichtung auch an eine Zuführung (300) einer Leitung zur Versorgung mit Flüssigkeit, bevorzugt mit Füllflüssigkeit für die auszubildenden Behälter angeschlossen ist.

9. Vorrichtung (1) nach Anspruch 7 oder 8, **dadurch gekennzeichnet, dass** die Flüssigkeitseinspritzeinrichtung aus einer Zylinder-/Kolbeneinheit besteht, in welcher der Kolben (203, 204), der eine Regeleinrichtung mit abwechselnden Verschiebungen bildet, in dem besagten Zylinder einerseits eine Regelkammer (200'), die an eine Druckluftversorgungsleitung (110) angeschlossen ist, und andererseits eine Flüssigkeitseinspritzkammer (200") abgrenzt, die an eine Zuführung (300) einer Flüssigkeitsversorgungsleitung angeschlossen und mit der Düse (102) verbunden ist.
